# EUROPÄISCHE PATENTSCHRIFT

(11) **EP 3 024 631 B1**
(45) Veröffentlichungstag und Bekanntmachung des Hinweises auf die Patenterteilung: **17.07.2019**
(21) Anmeldenummer: 14726617.5
(22) Anmeldetag: 28.05.2014
(51) Int. Cl.: B29C 48/86, B29C 48/87, B29C 48/92, B29C 48/32

(54) **BLASFOLIEN-EXTRUSIONSVORRICHTUNG UND VERFAHREN ZUR TEMPERATURREGELUNG**
BLOWN FILM EXTRUSION DEVICE AND METHOD FOR CONTROLLING THE TEMPERATURE
DISPOSITIF D'EXTRUSION DE FEUILLES SOUFFLÉES ET PROCÉDÉ DE RÉGLAGE DE TEMPÉRATURE

(30) Priorität: 26.07.2013 DE 102013108045
(43) Veröffentlichungstag der Anmeldung: 01.06.2016
(73) Patentinhaber: Windmöller & Hölscher KG, 49525 Lengerich (DE)
(72) Erfinder: BUSSMANN, Markus, 45147 Essen (DE); GOLDENSTEIN, Jens, 49074 Osnabrück (DE); STEUTER, Henning, 49545 Tecklenburg (DE)
(86) Internationale Anmeldenummer: PCT/EP2014/061023
(87) Internationale Veröffentlichungsnummer: WO 2015/010811

(56) Entgegenhaltungen:
- EP-A2- 0 096 179
- DE-A1- 4 207 439
- DE-A1- 19 644 910
- GB-A- 1 396 164
- JP-A- S61 254 324
- US-A1- 2006 275 523

## Beschreibung

Die vorliegende Erfindung betrifft eine Blasfolien-Extrusionsvorrichtung sowie ein Verfahren zur Temperaturregelung einer Blasfolien-Extrusionsvorrichtung.

Die Herstellung von Blasfolien erfolgt in bekannter Weise, indem aus einer von einem Extruder aufbereiteten thermoplastischen Schmelze über eine Blasfolien-Extrusionsvorrichtung ein ringförmiger Schlauch geformt wird, der über eine Abzugsvorrichtung flachgelegt und auf einem Wickler zu Rollen in gebrauchsfertigen Abmessungen aufgewickelt wird. Die Schlauchbildung wird dadurch erreicht, dass in der Blasfolien-Extrusionsvorrichtung ein Blaskopf mit einem ringförmigen Düsenspalt vorgesehen ist, aus dem die Schmelze während des Abzugsvorganges austritt, durch einen Außen- und Innenluftstrom gestützt und auf das gewünschte Format aufgeblasen wird. Sowohl der Außenluftstrom als auch der Innenluftstrom werden gekühlt, wodurch die Schmelze an die sogenannte Einfriergrenze (Frostzone) gebracht wird und die gewünschten Schlauchabmessungen mit Umfang und Dicke fixiert werden.

Gleichzeitig muss aber der Blaskopf in den Bereichen der Schmelzkanäle mit Heizleistungen von einigen kW bis zu 100 kW auf einer Temperatur gehalten werden, die der Temperatur der thermoplastischen Schmelze entspricht. Um hierbei die Verlustleistung zu reduzieren, sind beispielsweise aus der DE 1 729 129 A1 wärmeisolierende Hauben bekannt, die den Blaskopf gegenüber der äußeren Umgebungsluft isolieren.

Die GB 1 396 164 A und DE 42 07 439 A1 offenbaren gattungsgemäße Vorrichtungen bzw. Verfahren.

Aufgabe der Erfindung ist es, die Beheizung des Blaskopfes einer Blasfolien-Extrusionsvorrichtung zu verbessern.

Diese Aufgabe wird durch eine Blasfolien-Extrusionsvorrichtung nach dem Patentanspruch 1, und ein Verfahren zur Temperaturregelung nach dem Patentanspruch 7 gelöst.

Die erfindungsgemäße Blasfolien-Extrusionsvorrichtung umfasst einen Blaskopf und eine Isolierung, die einen Wärmewiderstand zur thermischen Isolation des Blaskopfs gegenüber der äußeren Umgebungsluft aufweist, wobei die Blasfolien-Extrusionsvorrichtung Elemente zur Steuerung des Wärmewiderstands aufweist.

Mit den erfindungsgemäßen Elementen zur Steuerung des Wärmewiderstands kann der Wärmewiderstand gegenüber der äußeren Umgebungsluft gezielt verändert werden, wobei die Steuerung grundsätzlich manuell (z.B. über einen Steuerhebel) und/oder automatisch erfolgen kann. Hierdurch kann ein schneller Wechsel des Wärmewiderstands erreicht werden, was die Temperaturregelung des gesamten Blaskopfes beschleunigt, und zwar sowohl während eines Aufheizvorgangs (z.B. beim Hochfahren der gesamten Anlage) als auch während eines Abkühlvorgangs (z.B. beim Herunterfahren der gesamten Anlage).

Erfindungsgemäß umfasst der Wärmewiderstand Mittel zum thermischen Trennen. Hierbei kann es sich sowohl um gasförmige Medien als auch um feste Medien handeln.

Erfindungsgemäß umfassen die Mittel zum thermischen Trennen also mindestens einen Luftspalt umfassen. Der Wärmewiderstand des mindestens einen Luftspalts kann dadurch gesteuert werden, dass die Luftströmung in dem mindestens einen Luftspalt beeinflusst wird. Zur Beeinflussung der Luftströmung kann dabei beispielsweise ein Gebläse mit elektrisch steuerbarer Gebläseleistung vorgesehen sein. Erfindungsgemäß sind zur Beeinflussung der Luftströmung bewegliche Klappen vorgesehen. Im geschlossenen Zustand schirmen die Klappen den Luftspalt von der äußeren Umgebungsluft ab. Im geöffneten Zustand erlauben die Klappen dagegen eine Zirkulation mit der äußeren Umgebungsluft durch Konvektion und/oder durch Wärmestrahlung und/oder durch eine von einem Gebläse erzeugte Luftströmung. Vorzugsweise sind die Klappen durch ein Getriebe untereinander verbunden. Auf diese Weise ist es möglich, dass alle vorhandenen Klappen von einem Bediener durch einen einzigen Steuerhebel gleichzeitig betätigt werden können. Alternativ oder zusätzlich ist es aber auch denkbar, dass die Klappen einzeln oder über das Getriebe zusammen motorisch ansteuerbar sind.

Es kann also von Vorteil sein, wenn die Elemente zur Steuerung des Wärmewiderstands wenigstens eine Klappe aufweisen, welche zwischen einer einen Luftspalt verschließenden Isolierposition und einer den Luftspalt öffnenden Kühlposition bewegbar gelagert ist. Hier kann demnach passiv und/oder aktiv das Einschalten der Kühlung beziehungsweise das Kühlen selbst erfolgen. Ist die Klappe geöffnet und damit in der Kühlposition, wird es möglich, dass zumindest durch Konvektion Wärme aus dem Luftspalt und damit vom Blaskopf abgetragen werden kann. Diese Konvektion kann zusätzlich oder alternativ auch zwangsgeführt durch ein Gebläse ausgebildet sein. Je nach Anordnung und Größe der jeweiligen Klappe kann in der geöffneten Kühlposition darüber hinaus Wärmestrahlung von dem Blaskopf durch die Öffnung, welche die Klappe in der geöffneten Position freigibt, austreten. Somit kann durch die Ausbildung der Klappe und die entsprechende geometrische Korrelation zum Blaskopf eine Auswahl getroffen werden, wie stark die jeweilige Klappe den Wärmewiderstand zur äußeren Umgebungsluft beeinflusst. Selbstverständlich können auch zwei oder mehr Klappen vorgesehen sein, die insbesondere mit unterschiedlichen Kühlarten oder unterschiedlichen Kühlleistungen betrieben werden können. In einfachster und kostengünstiger Weise sind alle Klappen gleich ausgebildet, so dass durch Öffnen aller Klappen die maximale Kühlleistung erzielbar wird. Damit wird eine maximale Reduktion der notwendigen Zeit für das Abkühlen des Blaskopfes erreicht. Selbstverständlich sind aber auch unterschiedliche Kühlarten, zum Beispiel die Kombination von Wärmeleitungen, Wärmekonvektion und Wärmestrahlung denkbar.

Nach einer weiteren bevorzugten Ausführungsform kann der Wärmewiderstand in dem mindestens einem Luftspalt dadurch gesteuert werden, dass nach dem Prinzip einer Thermoskanne ein Unterdruck bzw. ein Vakuum in dem Luftspalt erzeugt wird.

Nach einer weiteren bevorzugten Ausführungsform umfassen die Mittel zum thermischen Trennen ein festes Isoliermaterial, insbesondere Keramik, das innerhalb eines Isolierspaltes einbringbar ist. Die Elemente zur Steuerung des Wärmewiderstands können dabei die Position des festen Isoliermaterials innerhalb des Isolationsspaltes beeinflussen. Während also in einer Position das feste Isoliermaterial einen hohen Wärmewiderstand gegenüber der äußeren Umgebungsluft erzeugt, kann der Wärmewiderstand gesenkt werden, wenn das feste Isoliermaterial in eine andere Position gebracht wird. Vorzugsweise ist die die Position des festen Isoliermaterials dabei motorisch ansteuerbar.

Nach einer weiteren bevorzugten Ausführungsform umfassen die Mittel zum thermischen Trennen eine Schicht mit öldurchflossenen Leitungen, wobei das Öl in einer externen Temperieranlage durch Heizen bzw. Kühlen auf die gewünschte Temperatur temperiert wird.

Nach einer weiteren bevorzugten Ausführungsform umfassen die Mittel zum thermischen Trennen eine Schicht mit Peltier-Elementen. Ein Peltier-Element ist ein elektrothermischer Wandler, der basierend auf dem Peltier-Effekt bei Stromdurchfluss eine Temperaturdifferenz oder bei Temperaturdifferenz einen Stromfluss (Seebeck-Effekt) erzeugt. Peltier-Elemente können hier sowohl zur Kühlung als auch - bei Stromrichtungsumkehr - zum Heizen verwendet werden.

Die erfindungsgemäße Temperaturregelung für eine Blasfolien-Extrusionsanlage umfasst ein erstes Steuersignal zur Steuerung der Heizleistung einer in dem Blaskopf integrierten Heizung und ein zweites Steuersignal zur Ansteuerung der Elemente zur Steuerung des Wärmewiderstands.

Bei dem erfindungsgemäßen Verfahren zur Temperaturregelung einer Blasfolien-Extrusionsvorrichtung wird mit einem ersten Steuersignal die Heizleistung einer in dem Blaskopf integrierten Heizung gesteuert und mit einem zweiten Steuersignal die Elemente zur Steuerung des Wärmewiderstands gesteuert.

Nach einer bevorzugten Ausführungsform ist die Temperaturregelung beim Herunterfahren der Anlage darauf ausgerichtet, dass der Wärmewiderstand auf einen möglichst niedrigen Wert geändert werden kann, um ein möglichst schnelles Abkühlen des Blaskopfs zu ermöglichen.

Nach einer weiteren bevorzugten Ausführungsform ist die Temperaturregelung während des Betriebs darauf ausgerichtet, dass der steuerbare Wärmewiderstand neben der Blaskopfheizung als weitere Stellgröße zur Regelung der Blaskopftemperatur dienen kann. Beispielsweise kann so auch während des Betriebs die Temperatur des Blaskopfs schnell reduziert werden, sobald aufgrund einer hohen Schmelztemperatur der Blaskopf zur Überhitzung neigt oder aus sonstigen Verfahrensgründen die Blaskopftemperatur gesenkt werden muss.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erste Ausführungsform einer erfindungsgemäßen Blasfolien-Extrusionsvorrichtung,
- Fig. 2: die Ausführungsform der Fig. 1 mit den Elementen in Kühlposition,
- Fig. 3: eine weitere Ausführungsform einer erfindungsgemäßen Blasfolien-Extrusionsvorrichtung,
- Fig. 4: die Ausführungsform der Fig. 3 mit der Kühlklappe in Kühlposition,
- Fig. 5: eine weitere Ausführungsform einer erfindungsgemäßen Blasfolien-Extrusionsvorrichtung,
- Fig. 6: die Ausführungsform der Fig. 5 mit der Kühlklappe in Kühlposition,
- Fig. 7: eine weitere Ausführungsform einer erfindungsgemäßen Blasfolien-Extrusionsvorrichtung,
- Fig. 8: die Ausführungsform der Fig. 7 mit der Kühlklappe in Kühlposition,
- Fig. 9: eine weitere Ausführungsform einer erfindungsgemäßen Blasfolien-Extrusionsvorrichtung,
- Fig. 10: eine Ausführungsform einer erfindungsgemäßen Isolierung,
- Fig. 11: eine weitere Ausführungsform einer Kühlklappe und
- Fig. 12: die Ausführungsform der Fig. 11 mit der Kühlklappe in Kühlposition.

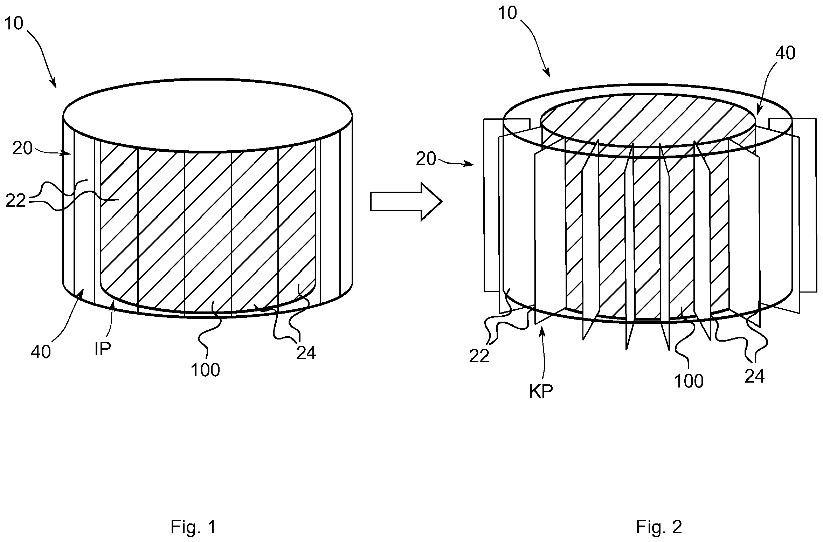

Die Fig. 1 und 2 zeigen eine erste Ausführungsform einer erfindungsgemäßen Blasfolien-Extrusionsvorrichtung 10. Diese ist um einen Blaskopf 100 herum angeordnet, wobei hierbei eine nicht näher dargestellte Trägerstruktur 30 die Befestigung in der dargestellten Weise erzeugt. Dabei wird zwischen der Isolierung 20 und dem Blaskopf 100 ein Isolierspalt 40 ausgebildet. Die Fig. 1 zeigt einzelne Elemente 22 zur Steuerung des Wärmewiderstands in Form von Kühlklappen 24 in der Isolierposition IP, während die Fig. 2 sämtliche Kühlklappen 24 in der Kühlposition KP zeigt. Bei dieser Ausführungsform erfolgt die Kühlung durch Wärmekonvektion und Wärmestrahlung.

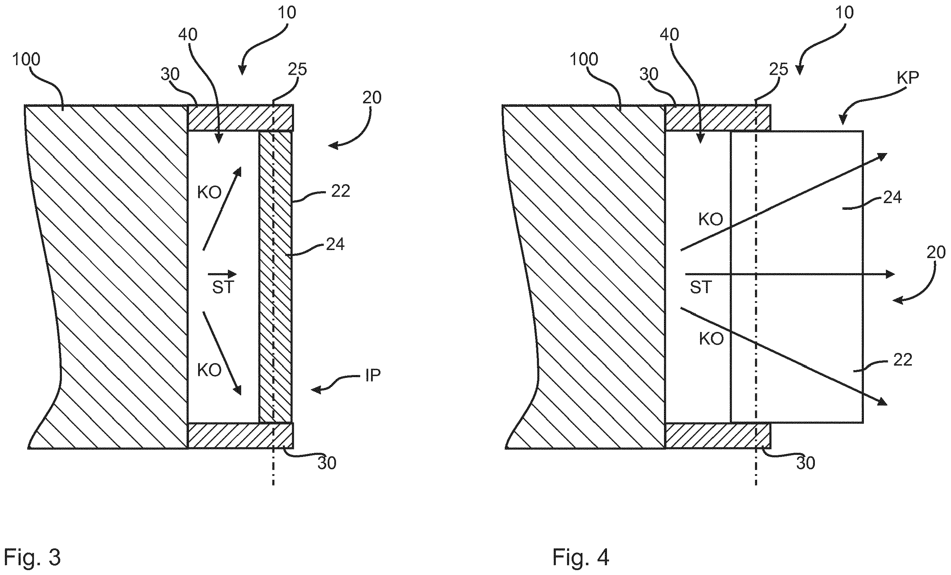

Die Fig. 3 und 4 zeigen schematisch in einem Querschnitt die Ausführungsform der Fig. 1 und 2. In den Fig. 3 und 4 sind im schematischen Querschnitt der Blaskopf 100 und die als Kühlklappen 24 ausgebildeten Elemente 22 dargestellt. Mit schematischen Pfeilen sind im Kühlspalt 40 die Wärmekonvektion KO und die Wärmestrahlung ST dargestellt. Bewegt sich durch Klappen der Kühlklappe 24 die Kühlklappe 24 von der isolierenden Position IP in die Kühlposition KP gemäß Fig. 4, kann eine Wärmeabtragung durch Konvektion KO und Wärmestrahlung ST erfolgen. Auch ist die Rotationsachse beziehungsweise die Öffnungsachse 25 der Kühlklappe 24 zu erkennen

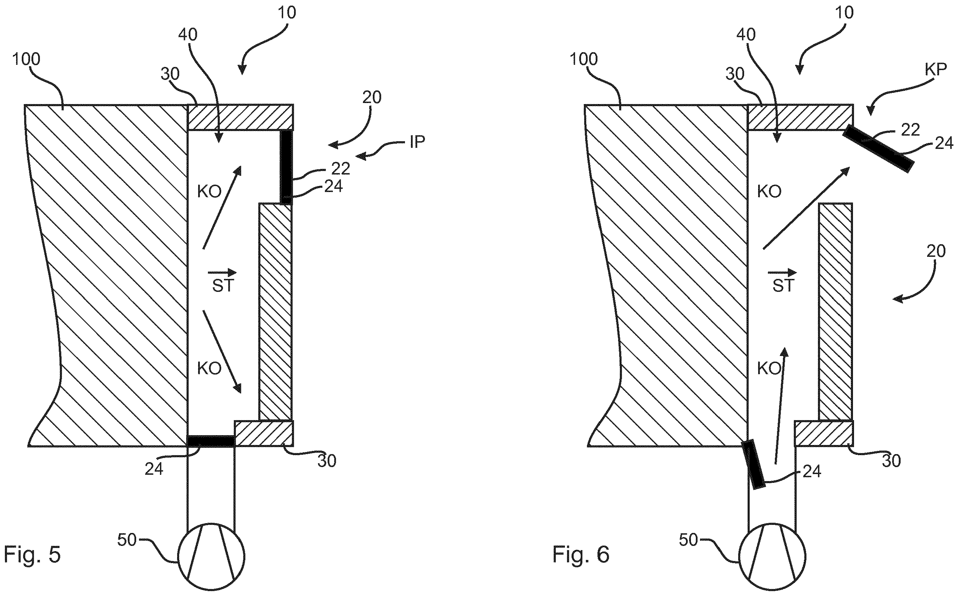

In den Fig. 5 und 6 ist eine Ausführungsform der Kühlklappen 24 der Elemente 22 zu erkennen, welche einen Kamineffekt ermöglichen. So ist eine erste Kühlklappe 24 axial unten und eine zweite Kühlklappe 24 axial oben angeordnet. Im geöffneten Zustand, also in der Kühlposition KP gemäß Fig. 6, entwickelt sich ein Kamineffekt, welcher sich positiv auf die Wärmeabtragung durch Konvektion auswirkt. Zusätzlich ist zur Unterstützung und zur Erzeugung einer Zwangskonvektion eine Gebläsevorrichtung 50 vorgesehen.

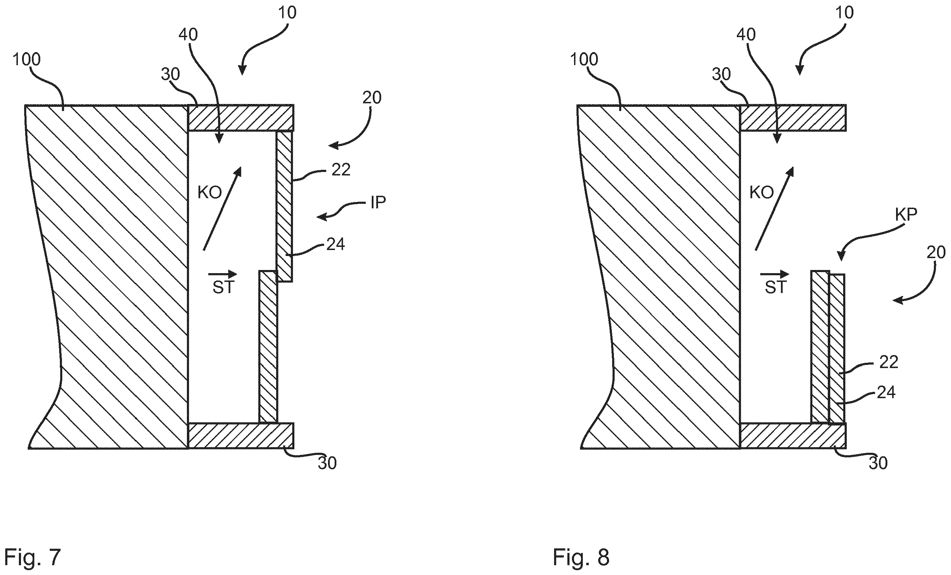

Auch die Fig. 7 und 8 zeigen eine weitere Ausführungsform einer erfindungsgemäßen Blasfolien-Extrusionsvorrichtung. Hierbei wird eine Teleskopstruktur der Kühlklappe 24 des Elements 22 zur Verfügung gestellt, so dass durch axiales Verschieben eines äußeren Zylindermantels relativ zu einem inneren Zylindermantel eine Reduktion der axialen Erstreckung der Isolierung 20 zur Verfügung gestellt und damit eine Öffnung freigegeben wird. Damit kann auch hier wieder Wärmestrahlung ST und Konvektion KO aus dem Blaskopf 110 beziehungsweise aus dem Isolierspalt 40 austreten.

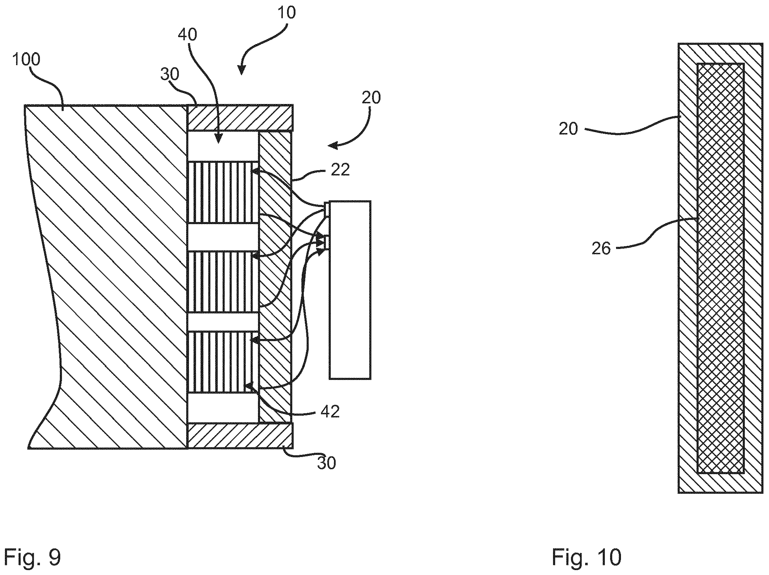

Fig. 9 zeigt eine weitere Lösung einer erfindungsgemäßen Blasfolien-Extrusionsvorrichtung 10, bei welcher innerhalb des Isolierspalts 40 einzelne Temperiervorrichtungen 42 als Möglichkeiten für Elemente 22 innerhalb des Isolierspaltes 40 angeordnet sind. Bei den Elementen kann es sich beispielsweise um mit temperiertem Öl durchflossene Heizbänder oder um elektrisch angesteuerte Peltierelemente handeln.

Fig. 10 zeigt schematisch eine mögliche Sandwichstruktur der Isolierung 20, wobei innerhalb dieser Isolierung 20 ein Isoliermaterial 26 angeordnet ist. Dabei handelt es sich beispielsweise um eine sogenannte Aerogelmatte. Idealerweise sollte die Innenseite der Sandwichstruktur von der Außenseite vollständig thermisch getrennt sein, sodass keine Wärmebrücken zwischen der Innenseite und der Außenseite vorliegen.

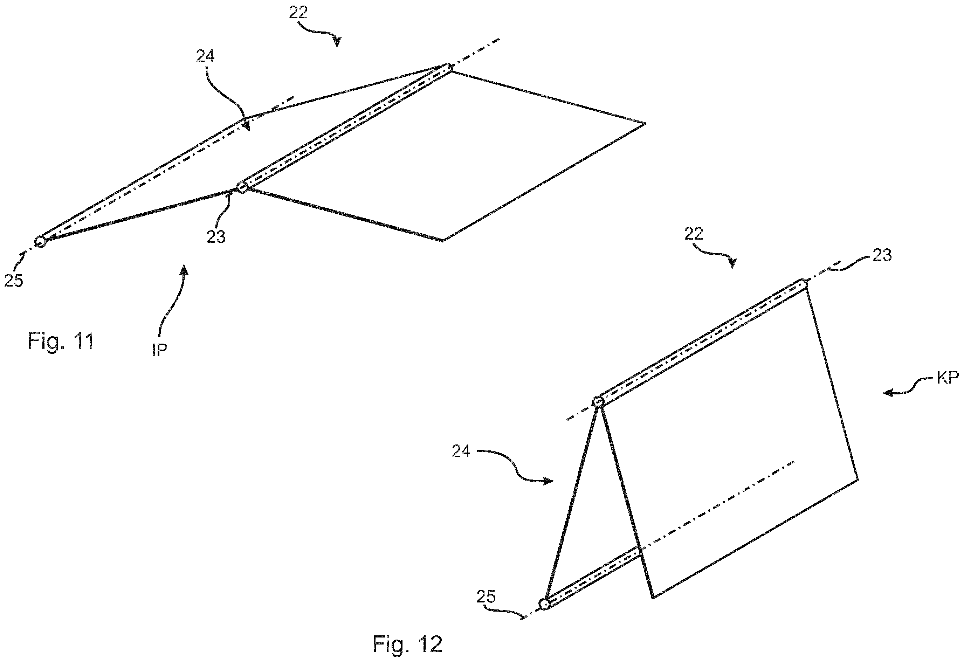

Die Fig. 11 und 12 zeigen eine weitere Ausführungsform einer möglichen Kühlklappe 24 des Elements 22. Diese ist zweiteilig ausgebildet, so dass beim Öffnen über eine Öffnungsachse 25 über eine Faltachse 23 eine Reduktion der geometrischen Flächenerstreckung der Kühlklappe 24 erfolgen kann. Damit wird auch unter beengten Verhältnissen eine möglichst große Öffnungsquerschnittsfläche zur Verfügung gestellt, um möglichst große Kühlleistung zu erreichen.

Die Erläuterung der voranstehenden Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne der Rahmen der vorliegenden Erfindung zu verlassen.

### Bezugszeichenliste

- 10: Blasfolien-Extrusionsvorrichtung
- 20: Isolierung
- 22: Element zur Steuerung des Wärmewiderstands
- 23: Faltachse
- 24: Kühlklappe
- 25: Öffnungsachse
- 26: Isoliermaterial
- 30: Trägerstruktur
- 40: Isolierspalt
- 42: Temperiervorrichtung
- 50: Gebläsevorrichtung

- 100: Blaskopf

- IP: Isolierposition
- KP: Kühlposition

- KO: Konvektion
- ST: Strahlung

## Patentansprüche

1. Blasfolien-Extrusionsvorrichtung (10) mit einem Blaskopf (100) und mit einer Isolierung (20), die einen Wärmewiderstand zur thermischen Isolation des Blaskopfs (100) gegenüber der äußeren Umgebungsluft aufweist, wobei die Blasfolien-Extrusionsvorrichtung (10) Elemente (22) zur Steuerung des Wärmewiderstands aufweist,
wobei der Wärmewiderstand Mittel zum thermischen Trennen umfasst,
wobei die Mittel zum thermischen Trennen mindestens einen Luftspalt umfassen, wobei die Elemente (22) zur Steuerung des Wärmewiderstands die Luftströmung in dem mindestens einen Luftspalt beeinflussen, **dadurch gekennzeichnet, dass** zur Beeinflussung der Luftströmung bewegliche Klappen (24) vorgesehen sind.

2. Blasfolien-Extrusionsvorrichtung (10) nach Anspruch 1, wobei zur Beeinflussung der Luftströmung ein Gebläse (50) mit elektrisch steuerbarer Gebläseleistung vorgesehen ist.

3. Blasfolien-Extrusionsvorrichtung (10) nach Anspruch 1, wobei die Klappen (24) durch ein Getriebe untereinander verbunden und motorisch ansteuerbar sind.

4. Blasfolien-Extrusionsvorrichtung (10) nach einem der Ansprüche 1 - 3, wobei die Mittel zum thermischen Trennen ein festes Isotiermaterial (26), insbesondere Keramik, umfassen, das innerhalb eines Isolierspaltes (40) einbringbar ist.

5. Blasfolien-Extrusionsvorrichtung (10) nach Anspruch 4, wobei die Elemente (22) zur Steuerung des Wärmewiderstands die Position des festen Isoliermaterials (26) innerhalb des Isolationsspaltes (40) beeinflussen.

6. Blasfolien-Extrusionsvorrichtung (10) nach Anspruch 5, wobei die Position des festen Isoliermaterials motorisch ansteuerbar ist.

7. Verfahren zur Temperaturregelung einer Blasfolien-Extrusionsvorrichtung (10) nach einem der Ansprüche 1 - 6, wobei mit einem ersten Steuersignal die Heizleistung einer in dem Blaskopf (100) integrierten Heizung gesteuert wird und wobei mit einem zweiten Steuersignal die Elemente (22) zur Steuerung des Wärmewiderstands gesteuert werden.

## Claims

1. A blown film extrusion device (10) with a blow head (100) and with an insulation (20) which has a thermal resistance for the thermal insulation of the blow head (100) in relation to the outer ambient air, wherein the blown film extrusion device (10) has elements (22) for controlling the thermal resistance,
wherein the thermal resistance comprises means for the thermal separation,
wherein the means for the thermal separation comprise at least one air gap,
wherein the elements (22) for controlling the thermal resistance influence the air flow in the at least one air gap, **characterized in that** movable flaps (24) are provided to influence the air flow.

2. A blown film extrusion device (10) according to Claim 1, wherein to influence the air flow a fan (50) with electrically controllable fan output is provided.

3. A blown film extrusion device (10) according to Claim 1, wherein the flaps (24) are connected to one another by a gear unit and can be controlled by a motor.

4. A blown film extrusion device (10) according to any one of Claims 1 - 3, wherein the means for the thermal separation comprise a solid insulating material (26), in particular, ceramic, which can be introduced within an insulating gap (40).

5. A blown film extrusion device (10) according to Claim 4, wherein the elements (22) for controlling the thermal resistance influence the position of the solid insulating material (26) within the insulation gap (40).

6. A blown film extrusion device (10) according to Claim 5, wherein the position of the solid insulating material can be controlled by a motor.

7. A method for temperature regulation of a blown film extrusion device (10) according to any one of Claims 1 - 6, wherein with a first control signal the heat output of a heater integrated in the blow head (100) is controlled and wherein with a second control signal the elements (22) for controlling the thermal resistance are controlled.

## Revendications

1. Dispositif d'extrusion de film soufflé (10) avec une tête de soufflage (100) et avec une isolation (20), qui présente une résistance thermique pour l'isolation thermique de la tête de soufflage (100) par rapport à l'air environnant extérieur, le dispositif d'extrusion de film soufflé (10) comprenant des éléments (22) pour le contrôle de la résistance thermique,
la résistance thermique comprenant des moyens pour la séparation thermique,
les moyens de séparation thermique comprenant au moins un interstice d'air,
les éléments (22) influant, pour le contrôle de la résistance thermique, sur l'écoulement d'air dans l'au moins un interstice d'air, **caractérisé en ce que**, pour influer sur l'écoulement d'air, des clapets mobiles (24) sont prévus.

2. Dispositif d'extrusion de film soufflé (10) selon la revendication 1, moyennant quoi, pour influer sur l'écoulement d'air, un ventilateur (50) avec une puissance de ventilateur contrôlable électriquement est prévu.

3. Dispositif d'extrusion de film soufflé (10) selon la revendication 1, les clapets (24) étant reliés entre eux par l'intermédiaire d'une transmission et pouvant être contrôlés à l'aide d'un moteur.

4. Dispositif d'extrusion de film soufflé (10) selon l'une des revendications 1 à 3, les moyens de séparation thermique comprenant un matériau isolant solide (26), plus particulièrement de la céramique, qui peut être inséré à l'intérieur d'un interstice d'isolation (40).

5. Dispositif d'extrusion de film soufflé (10) selon la revendication 4, les éléments (22) influant, pour le contrôle de la résistance thermique, sur la position du matériau isolant solide (26) à l'intérieur de l'interstice d'isolation (40).

6. Dispositif d'extrusion de film soufflé (10) selon la revendication 5, la position du matériau isolant solide pouvant être contrôlée à l'aide d'un moteur.

7. Procédé de régulation de température d'un dispositif d'extrusion de film soufflé (10) selon l'une des revendications 1 à 6, moyennant quoi, un premier signal de commande, permet de contrôler la puissance de chauffage d'un chauffage intégré dans la tête de soufflage (100) et un deuxième signal de commande permet de contrôler les éléments (22) pour le contrôle de la résistance thermique.
